**Europäisches Patentamt**

**European Patent Office**

**Office européen des brevets**

(11) Veröffentlichungsnummer: **0 260 575**
**B1**

# (12) EUROPÄISCHE PATENTSCHRIFT

(45) Veröffentlichungstag der Patentschrift:
**14.06.89**

(21) Anmeldenummer: **87113089.4**

(22) Anmeldetag: **08.09.87**

(51) Int. Cl.⁴: **F23Q 7/00**

(54) **Zündvorrichtung für eine luftverdichtende Brennkraftmaschine.**

(30) Priorität: **16.09.86 DE 3631473**

(43) Veröffentlichungstag der Anmeldung:
**23.03.88 Patentblatt 88/12**

(45) Bekanntmachung des Hinweises auf die Patenterteilung:
**14.06.89 Patentblatt 89/24**

(84) Benannte Vertragsstaaten:
**AT DE FR GB IT NL SE**

(56) Entgegenhaltungen:
**DE-A- 1 451 889**
**DE-B- 1 240 335**
**DE-B- 1 526 773**
**FR-E- 61 972**
**US-A- 1 379 060**

(73) Patentinhaber: **Pischinger, Franz, Prof. Dr. techn., Im Erkfeld 4, D-5100 Aachen(DE)**

(72) Erfinder: **Hilger, Ulrich, Dipl.-Ing., Königstrasse 73b, D-5100 Aachen(DE)**

(74) Vertreter: **Nau, Walter, Dipl.-Ing.,
Klöckner-Humboldt-Deutz AG
Deutz-Mülheimer-Strasse 111, D-5000 Köln 80(DE)**

## Beschreibung

Die Erfindung bezieht sich auf eine Zündvorrichtung für eine luftverdichtende Brennkraftmaschine nach dem Oberbegriff des Anspruchs 1.

Der Einsatz von alternativen Kraftstoffen für den Straßenverkehr ist aus Gründen einer langfristigen Verfügbarkeit sowie unter dem Aspekt der Versorgungssicherheit und Energiekostenentwicklung nach wie vor von großem Interesse. Als die für den Einsatz in Fahrzeugmotoren am besten geeigneten alternativen Kraftstoffe werden die Alkohole Methanol und Ethanol angesehen, die in vielen Ländern aus national verfügbaren Primärenergieträgern wie Erdgas und Kohle sowie aus Biomasse hergestellt werden können.

Aufgrund ihrer Stoffeigenschaften bieten sich Methanol bzw. Ethanol in erster Linie für den Einsatz im Otto-Motor an. Ein guter Motorwirkungsgrad sowie die alkoholtypische rußfreie Verbrennung und damit die erheblich reduzierten Partikelemissionen lassen aber auch den Einsatz von Alkoholkraftstoffen in Dieselmotoren sinnvoll erscheinen. Infolge der schlechten Selbstzündungseigenschaften der Alkohole sind jedoch Maßnahmen zur Sicherstellung der Zündung des Kraftstoff-Luftgemisches erforderlich.

Bei einem Reinalkoholverfahren wird die Verbrennung durch Fremdzündung eingeleitet. Ein seit längerem bekanntes Fremdzündungsverfahren besteht in der Anwendung der Entflammung an heißen Oberflächen (Glühzündung), da sich insbesondere Methanol aber auch Ethanol bereits bei relativ niedrigen Oberflächentemperaturen entzünden. Dieses Verfahren ist deshalb von großem Interesse, da mit relativ geringem Aufwand die Anpassung des Dieselmotors an den Alkoholbetrieb möglich ist. Darüber hinaus weist das Glühzündungsverfahren ein gutes Motorbetriebsverhalten sowie ein sehr günstiges Schadstoffemissionsverhalten auf.

Bei Glühzündungsverfahren ist darauf zu achten, daß die Lage von Einspritzdüse und Zündvorrichtung so zu wählen ist, daß in allen Betriebszuständen des Motors eine ausreichende Gemischmenge an die heiße Oberfläche gelangt und entzündet wird.

Aus der gattungsgemäßen DD-PS 39 916 ist eine luftverdichtende Brennkraftmaschine bekannt, bei der der Brennstoff über eine Einspritzdüse in den in dem Kolben angeordneten Brennraum eingespritzt wird. Um das in dem Brennraum befindliche Brennstoff-Luftgemisch zu entzünden, ist eine Zündvorrichtung bestehend aus einem Glühstift oder einer Zündkerze mit einer das jeweilige Heizelement umschließenden Hülse vorgesehen. Durch das Anbringen einer Hülse soll ein Auskühlen des Heizelements durch den auftreffenden Kraftstoff vermieden werden. Trotz der Abschirmung durch die Hülse bewirkt der durch die Eintrittsöffnungen eintretende Kraftstoff eine starke Abkühlung des Heizelements. Um eine ausreichend hohe Oberflächentemperatur zur sicheren Zündung des Kraftstoff- Luftgemisches zu gewährleisten, muß dem Heizelement laufend soviel elektrische Energie zugeführt werden, daß eine zum Verdampfen und Entzünden der auftreffenden Kraftstoffstrahlen bzw. des Gemisches ausreichende Wärmemenge zur Verfügung steht. Die dauernde elektrische Beheizung der Heizelemente reduziert jedoch deren Lebensdauer beträchtlich.

Aus der FR-E 61 972 ist eine Zündvorrichtung bekannt, bei der die Mittelelektrode einer Zündkerze in einem Isolationskörper eingebettet ist, wobei der Isolationskörper wiederum in ein Gehäuse eingesetzt ist, das gleichzeitig ein Gewinde zum Einschrauben in den Zylinderkopf aufweist. In diesem Gewindeteil ist nun eine Hülse bis knapp unter das brennraumseitige Ende der Mittelelektrode eingesetzt. In der Hülse ist freischwebend eine Spirale nur mittels Anschlüssen befestigt. Eine Eintrittsöffnung für Kraftstoff ist an dem Umfang der Hülse nicht vorgesehen.

Der Erfindung liegt die Aufgabe zugrunde, eine Zündvorrichtung für luftverdichtende Brennkraftmaschinen bereitzustellen, durch die eine zuverlässige Entzündung des in den Brennraum der Brennkraftmaschine eingespritzten, vorzugsweise zündunwilligen Brennstoffs im gesamten Betriebsbereich sichergestellt ist, wobei die der Zündvorrichtung zuzuführende Heizleistung minimiert werden soll.

Diese Aufgabe wird nach den kennzeichnenden Merkmalen des Anspruchs 1 gelöst.

Es hat sich gezeigt, daß dem erfindungsgemäßen Heizelement beim Betrieb der Brennkraftmaschine aufgrund der Anordnung des als Wärmespeicher arbeitenden Glühkörpers eine deutlich geringere elektrische Energie zur Aufheizung zugeführt werden muß. Der eingesetzte Glühkörper weist durch seine Ausbildung eine große Oberfläche auf, an der sich der Kraftstoff bzw. das Kraftstoff- Luftgemisch entzünden kann. Hierbei tritt durch den Verbrennungsvorgang in der Hülsenkammer eine starke Aufheizung des Glühkörpers auf, der die ihm durch die Verbrennung zugeführte Wärmemenge ohne große Verluste bis zum nächsten Einspritzvorgang speichert, so daß bei einem nächsten Einspritzvorgang eine Entzündung des Brennstoff-Luftgemisches am Glühkörper selbst möglich ist. Eine elektrische Beheizung der Zündvorrichtung über das Heizelement kann daher weitgehend entfallen. Neben einer geringeren elektrischen Beheizung werden auch ein deutlich verbessertes Abgasverhalten (geringe Emissionen von Gesamtkohlenwasserstoffen und Kohlenmonoxide) erzielt, was auf die deutliche Oberflächenerhöhung durch den eingesetzten Glühkörper und damit verbesserten Glühzündungsbedingungen zurückzuführen ist. Zum Anlassen des Motors und um eine sichere Zündung bei Wiederbeschleunigung nach Schubbetrieb und unter anderen ungünstigen Zündverhältnissen (niedrige Ansaugluftttemperatur) zu gewährleisten, ist das Heizelement mit einem Steuergerät verbunden, das immer eine zur Zündung ausreichende Oberflächentemperatur gewährleistet. Das Steuergerät steuert hierzu in Abhängigkeit von einem oder mehreren Betriebsparametern der Brennkraftmaschine die dem Heizelement zuzuführende elektrische Energie.

Vorteilhaft ist der Glühkörper als Glühwendel ausgebildet, der mehrere Windungen aufweist und zum Besispiel aus einem verzunderungsbeständigem Chrom-Nickel-Stahl hergestellt ist, der insbesondere eine katalytische Beschichtung aufweist. Hierbei erfolgt bei Auftreffen von Alkohol- Kraftstoff wie Methanol eine katalytische Spaltung in Gase wie CO und $H_2$, die eine erhebliche niedrigere Zündtemperatur besitzen als das Methanol selber. Dieser katalytische Effekt führt somit zu einer Verringerung der Zündtemperatur und damit zu einer weiteren Verminderung der aufzubringenden elektrischen Heizleistung und damit der thermischen Belastung des Heizelementes.

Insbesondere hat sich für den Glühkörper der Einsatz von Platin oder Platinlegierungen als vorteilhaft erwiesen. Es kann auch zweckmäßig sein, eine Keramik mit hoher Wärmeleitfähigkeit zu verwenden, die vorzugsweise eine katalytische Beschichtung aufweist. Insbesondere in Verbindung mit Keramik ist die Ausbildung des Glühkörpers als stark perforierter, hohlzylindrischer Einsatz vorteilhaft. Ein derartiger siebartiger Einsatz ist aus Keramik leicht fertigbar.

Die Zündvorrichtung ist vorteilhaft so bemessen, das in ihr zwei Glühkörper für eine weitere Vergrößerung der zündauslösenden Oberfläche angeordnet werden können.

Zweckmäßig ist die Zündvorrichtung so ausgebildet bzw. ausgerichtet, daß Kraftstoff nicht unmittelbar auf den Glühkörper und das Heizelement, die zusammen die Zündquelle bilden, auftreffen kann. Hierzu kann hinter der Kraftstoffeintrittsöffnung eine Prallwand vorgesehen sein oder die Eintrittsöffnung zum Kraftstoffstrahl so ausgerichtet sein, daß er neben der Eintrittsöffnung auf die Hülse auftritt. Im letzten Fall tritt durch die Eintrittsöffnung bereits zündfähiges Kraftstoff- Luftgemisch.

Die erfindungsgemäße Zündvorrichtung ist insbesondere bei luftverdichtenden Brennkraftmaschinen einsetzbar, bei denen selbstzündungsunwilliger Kraftstoff (Methanol, Ethanol) allein oder in einer Mischung mit anderen Alkoholen, Benzin oder Dieselkraftstoff verwendet wird. Daneben kann die erfindungsgemäße mit einem selbstzündungswilligen Brennstoff betriebenen Brennkraftmaschinen eingesetzt werden.

Weitere Merkmale der Erfindung ergeben sich aus den weiteren Ansprüchen sowie der Beschreibung in der die in den Zeichnungen dargestellten Ausführungsbeispiele der Erfindung näher erläutert sind.

Es zeigen:

Fig. 1 in Draufsicht die räumliche Zuordnung der Einspritzdüse und der Zündvorrichtung über einem Kolben mit Brennraummulde;
Fig. 2 einen Schnitt längs der Linie A–A in Fig. 1;
Fig. 3 einen Schnitt durch eine erste erfindungsgemäße Zündvorrichtung;
Fig. 4 einen Schnitt durch eine zweite erfindungsgemäße Zündvorrichtung;
Fig. 5 eine Ansicht auf Kraftstoffeintrittsöffnungen in der Hülse der Zündvorrichtung nach Fig. 4;
Fig. 6 ein Diagramm des über den Kurbelwellenwinkel aufgetragenen Temperaturverlaufs in der erfindungsgemäßen Zündvorrichtung;

Fig. 7 ein Blockschaltbild einer elektrisch angepaßt beheizten Zündvorrichtung.

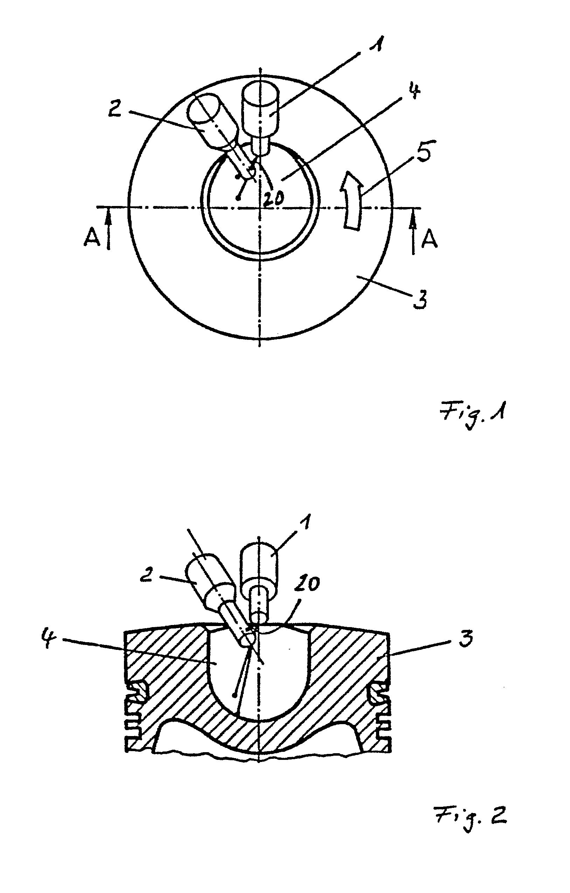

In den Figuren 1 und 2 ist die prinzipielle Anordnung einer Einspritzdüse 1 sowie einer Zündvorrichtung 2 in einem Zylinder und zu einem Kolben 3 dargestellt, wobei der Brennraum als Mulde 4 in den Kolben 3 eingelassen ist. Dabei kommt ein Brennverfahren mit wandnaher Kraftstoffeinspritzung und hohem Luftdrall in Pfeilrichtung 5 (starke Ladungsbewegung) zur Anwendung. Die Zündvorrichtung 2 ist so zu der Einspritzdüse 1 geordnet, daß sie in Richtung des Luftdralls 5 hinter der Einspritzdüse 1 liegt, so daß im gesamten Last- und Drehzahlbereich der Brennkraftmaschine eine ausreichende Stoffmenge an die Zündvorrichtung 2 herangeführt ist.

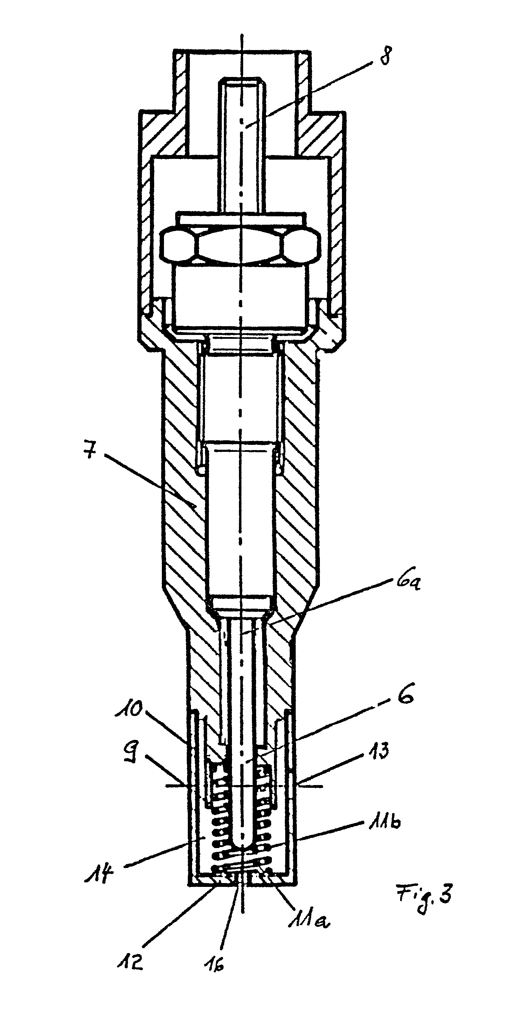

Bei wandnaher Einspritzung ist aufgrund einer weitgehenden Abschirmung gegen das bei diesem Brennverfahren unvermeidliche Auftreffen großer Mengen flüssigen Kraftstoffs und den starken Luftdrall im Brennraum insbesondere die Zündvorrichtung nach Fig. 3 vorteilhaft einsetzbar. Das als Glühstift 6 ausgebildete Heizelement ragt aus einem Halter 7 und ist von einer am Halter 7 befestigten, durch einen Boden 12 zum Brennraum geschlossene Hülse 10 abgeschirmt. Die Hülse 10 umgibt den Glühstift 6 mit allseitigem Abstand.

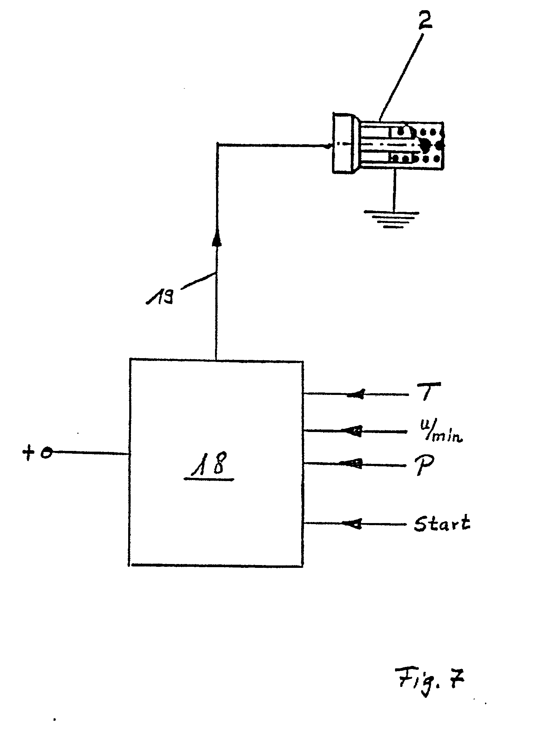

Der Glühstift 6 hat eine innenliegende elektrische Heizwicklung, der über einen abgeschirmten elektrischen Anschluß 8 elektrische Energie zugeführt ist, wobei der notwendige zweite elektrische Anschluß von dem Halter 7 selbst gebildet ist (vgl. Fig. 7). Zwischen der Hülse 10 und dem Glühstift 6 ist mindestens ein als Glühwendel 11 ausgebildeter Glühkörper angeordnet, der als Wärmespeicher dient. Im Ausführungsbeispiel sind zwei Wendel vorgesehen, die sich mit einem Ende am Boden 12 der Hülse 10 und mit ihrem anderen Ende am Halter 7 abstützen. Der erste Wendel 11a sitzt fest auf dem Außenumfang des Glühstiftes 6 auf und liegt, ebenso wie der zweite Wendel 11b koaxial zur Achse 6a des Glühstiftes 6. Durch den eng am Glühstift anliegenden Wendel werden ein guter Wärmetransport vom elektrisch beheizten bzw. als Wärmespeicher dienenden Glühstift 6 an den Glühkörper 11 gewährleistet und damit gute Glühzündungsbedingungen sichergestellt. Der äußere Wendel 11b umgibt den inneren Wendel 11a mit Abstand und liegt auf seinem dem Halter 7 zugewandten Ende in einem Hülsenring 9, der vorteilhaft am Halter 7 befestigt oder einteilig mit diesem ausgebildet ist. Der Hülsenring 9 ist so angeordnet, daß er hinter der einzigen Kraftstoffeintrittsöffnung 13 in der Hülse 10 liegt und als Prallplatte für einen durch die Eintrittsöffnung 13 direkt eintretenden Kraftstoffstrahl dient. Im gezeigten Ausführungsbeispiel überdeckt der Hülsenring etwas ein Drittel bis zu Hälfte der axialen Länge des Glühkörpers 11, wobei die Eintrittsöffnung 13 etwa auf halber axialer Länge des Hülsenrings 9 liegt.

Bei einer Anordnung der Zündvorrichtung in der in den Figuren 1 und 2 gezeigten Art ist mindestens ein Einspritzstrahl (vorzugsweise mehre Einspritzstrahlen) zum Einbringen des Kraftstoffes in den Brennraum vorgesehen. Zusätzlich ist ein Zündstrahl 20 zur Sicherstellung einer ausreichenden Menge zündfähigen Gemisches am Glühkörper 11 auf die Einspritzöffnung 13 ausgerichtet. Dabei liegt die Achse der Eintrittsöffnung 13 etwa gleichachsig mit der Achse des Zündstrahles 20. Der Zündstrahl tritt durch die Eintrittsöffnung 13 unmittelbar in die Kammer 14 der Zündvorrichtung 2 ein. Der Strahl trifft dabei auf den als Prallwand eingesetzten Hülsenring 9, wodurch ein direktes Auftreffen des Kraftstoffs auf den als Wärmespeicher dienenden Glühkörper (Glühwendel 11a, 11b) und den Glühstift vermieden und damit eine starke Auskühlung der Zündquelle verhindert ist. Das sich bildende fette Kraftstoff- Luftgemisch wird dabei an der heißen Oberfläche der Wendel und des Glühstifts entzündet und aufgrund der hierbei entstehenden Druckerhöhung durch die Eintrittsöffnung 13 wieder ausgeblasen. Falls erforderlich, kann zum besseren Ausblasen des entzündeten Gemisches eine oder mehrere Bohrungen in der Hülse 10 vorgesehen sein. Vorzugsweise ist eine Bodenöffnung 15 vorgesehen, die gleichachsig zur Achse 6a des Glühstiftes 6 liegt und auf die Brennraummulde 4 ausgerichtet ist. Vorzugsweise ist die Eintrittsöffnung 13 größer als die Bodenöffnung 16. Es hat sich als vorteilhaft erwiesen, die Eintrittsöffnung 13 mit einem Durchmesser von ca. 3 mm und eine oder mehrere Bodenöffnungen 16 (Austrittsöffnung) mit einem Durchmesser von 0,5 bis 1 mm auszuführen. Das durch die Öffnungen 13 und 16 austretende, brennende Gemisch dient als "Zündstrahl" für das im Brennraum (Brennraummulde) befindliche Kraftstoff-Luftgemisch.

Durch die Verbrennung in der Kammer 14 sowie durch die hohen Gastemperaturen im Brennraum selbst, werden die Glühwendeln 11a und 11b, die aufgrund des geringen Drahtdurchmessers im Bereich von 0,5 bis 1,0 mm bei fünf bis zehn Windungen eine geringe Wärmeträgheit aufweisen, in sehr kurzer Zeit bis auf Temperaturen von ca. 1 000°C erhitzt. Die bei der nachfolgenden Expansions- und Ladungswechselphase auftretende Abkühlung der Glühwendel erfolgt aufgrund der stark wärmeisolierenden Wirkung der Hülse 10 in der weitgehend geschlossenen Kammer 14 so langsam, daß die zur Oberflächenzündung des Kraftstoff- Luftgemisches erforderliche Oberflächentemperatur auch ohne Beheizung nicht unterschritten wird.

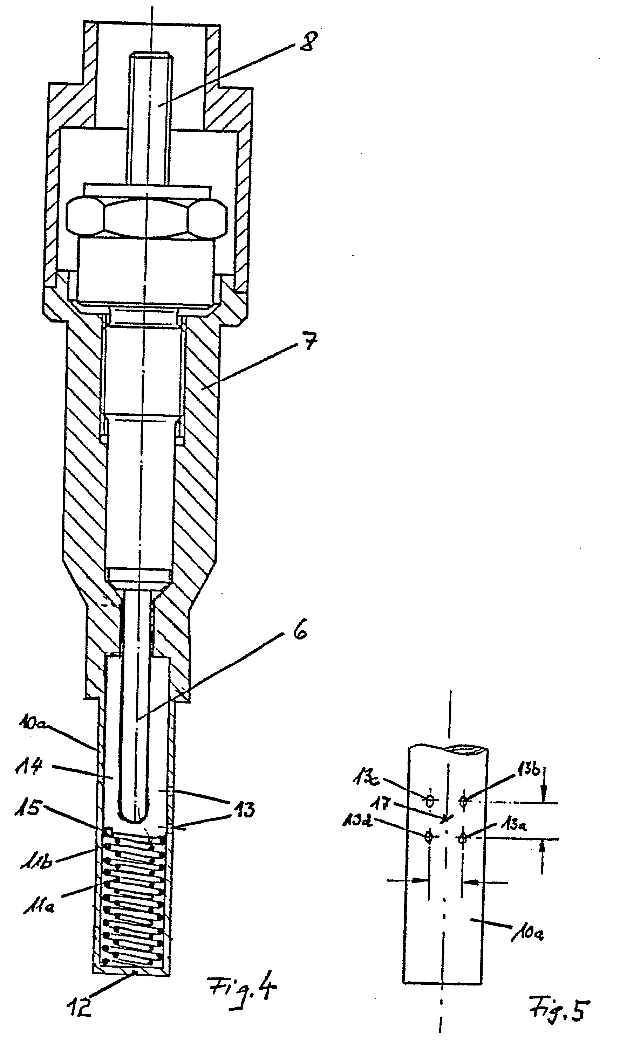

Die Zündvorrichtung nach Fig. 4 ist im Aufbau der nach Fig. 3 weitgehend identisch. Abweichend von Fig. 3 ist die Hülse 10a axial länger ausgebildet, wobei die Glühwendel 11a und 11b im unteren Teil der Hülse 10a zwischen dessen Boden 12 und dem Glühstift 6 angeordnet sind. Hierbei stützen sich die Enden der Glühwendel einerseits am Boden 12 und andererseit an einem hülsenfesten Bund 15 knapp unterhalb des Endes des Glühstifts 6 ab. Der Glühstift 6 und die Wendel 11a, 11b stehen daher in keiner direkten Verbindung zueinander. Die Wicklungen der Glühwendel 11a und 11b sind so zueinander ausgerichtet, daß der einen kleineren Durchmesser aufweisende innere Glühwendel 11a bei radialer Draufsicht auf den Glühwendel 11b den Zwischenraum zwischen einander benachbarten Windungen des äußeren Glühwendels 11b ausfüllt.

Oberhalb der Glühwendel 11a und 11b etwa auf Höhe des freien Endes des Glühstiftes 6 sind im Mantel der Hülse 10a vier Eintrittsöffnungen 13a bis 13d angeordnet, die in der Draufsicht nach Fig. 5 die Enden etwa eines Quadrates bilden.

Die erfindungsgemäße Zündvorrichtung nach Fig. 4 wird derart in einem Brennraum angeordnet, daß z.B. bei einer raumverteilten Einspritzung ein Einspritzstrahl der Einspritzdüse vorzugsweise innerhalb des durch die Eintrittsöffnung 13a bis 13d bestimmten Quadrates in einem Auftreffpunkt 17 auftrifft. Damit wird sichergestellt, daß durch die Eintrittsöffnungen 13a bis 13d kein Kraftstoff direkt eingespritzt wird. Der durch die Eintrittsöffnungen 13a bis 13d eintretende Kraftstoff liegt weitgehend in Form eines Kraftstoff- Luftgemisches vor, der keine sehr starke Abkühlung der Glühwendel 11a, 11b oder des Glühstiftes 6 bewirkt, so daß eine starke Auskühlung verhindert ist. Das eintretende Kraftstoff-Luftgemisch wird – wie schon im Zusammenhang mit dem Ausführungsbeispiel nach Fig. 3 beschrieben – in der Kammer 14 durch Oberflächenzündung entzündet und durch die Eintrittsbohrungen 13a bis 13b wieder ausgeblasen, wodurch eine Entflammung der anderen Einspritzstrahlen erfolgt.

Es kann zweckmässig sein, die Zündvorrichtung nach Fig. 3 bei einer wandnahen Einspritzung oder die Zündvorrichtung nach Fig. 4 bei einer zentralen (raumverteilten) Einspritzung (vergl. Fig. 1) anzuwenden. Vorzugsweise ist der Einsatz der erfindungsgemäßen Zündvorrichtungen mit einer Zapfeneinspritzdüse vorgesehen, die vor der Haupteinspritzung der Zündvorrichtung eine Zündmenge an Kraftstoff zumißt.

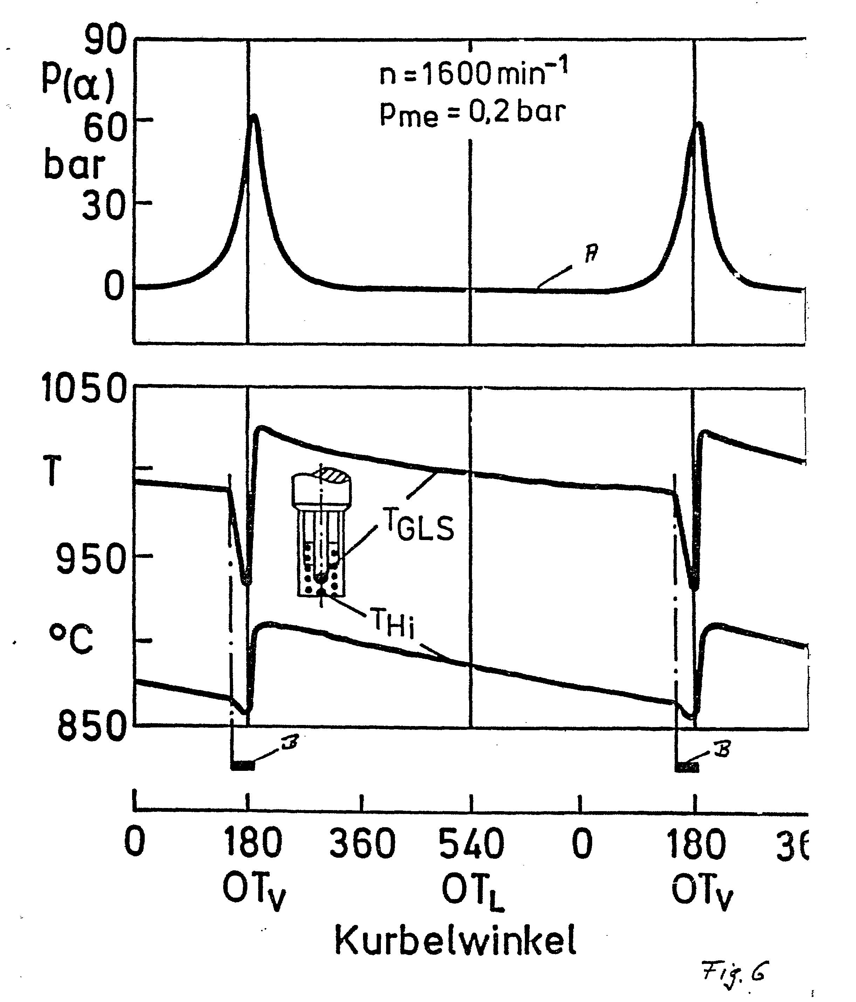

Anhand der Darstellung nach Fig. 6 wird ersichtlich, daß aufgrund der erfindungsgemäßen Anordnung in der Zündvorrichtung 2 ohne Fremdbeheizung ein Temperaturniveau gehalten wird, das für eine Oberflächenzündung ausreichend ist. Im oberen Diagramm in Fig. 6 ist der Zylinderdruckverlauf A über dem Kurbelwellenwinkel aufgetragen. In der unteren Hälfte der Fig. 6 ist der Temperaturverlauf $T_{GLS}$ am freien Ende des Glühstiftes 6 und der Temperaturverlauf $T_{Hi}$ innerhalb der Abschirmung etwa im Zentrum des Bodens 12 widergegeben. Der Zylinderdruckverlauf A weist zwei Maxima auf, die zwei aufeinanderfolgenden Verbrennungsvorgängen in einem Zylinder entsprechen. Der zu dem ersten Zylinderdruckmaximum – bezogen auf den Kurbelwellenwinkel – synchrone Temperaturwert weist im Bereich des Druckmaximums ein Temperaturminimum auf, da zu diesem Zeitpunkt die Einspritzung (Intervall B) erfolgt. Aufgrund des eingespritzten Kraftstoffs kühlt die Zündvorrichtung 2 geringfügig ab, wobei an der Glühstiftspitze dennoch Werte um 950°C und am Boden Werte von um 850°C aufrechterhalten werden. Während der einsetzenden Verbrennung erwärmt sich das Ende des Glühstiftes bis auf Maximaltemperaturen von ca. 1000°C und der Boden auf Temperaturen um 900°C, um dann aufgrund des Ladungswechsels bis zum nächsten Einspritzintervall B aufgrund der erfindungsgemäßen Ausgestaltung der Zündvorrichtung nur langsam abzukühlen. Der Darstellung in Fig. 6 ist deutlich zu entnehmen, daß die Aufheizung der erfindungsgemäßen Zündvorrichtung wesentlich schneller als die darauffolgende Abkühlung erfolgt.

Aufgrund dieses Temperaturverhaltens der erfindungsgemäßen Zündvorrichtung 2 kann die Zufuhr an elektrischer Heizleistung auf ein Minimum reduziert werden. Hierzu wird gemäß Fig. 7 ein Steuergerät 18 in die elektrische Leitung 19 zur Zündvorrichtung 2 geschaltet. Das Steuergerät erhält aber nicht näher dargestellte Sensoren Kenndaten der Brennkraftmaschine, wie z.B. aktuelle Drehzahl, anstehende Last, Temperatur usw. Ferner ist ein Startmeldesignal vorgesehen.

Auf das Startmeldesignal wird das Heizelement mit voller Leistung betrieben, um eine schnelle Aufheizung zu gewährleisten. Ist die Maschine gestartet (Drehzahlsignal), wird die Heizleistung zurückgefahren. In einem möglichen Betriebsfall des Steuergerätes ist nach dem Start das Heizelement mit geringer Leistung konstant beheizt (z.B. 20 bis 60 Watt). Diese Heizleistung wird in jedem Betriebszustand der Brennkraftmaschine aufrechterhalten.

In einem anderen Betriebsfall des Steuergerätes wird nach dem Start die Heizung ausgeschaltet und nur in notwendigen Betriebszuständen der Brennkraftmaschine (z.B. im Schiebebetrieb) eingeschaltet. Notwendige Betriebszustände werden anhand eines oder mehrerer gemeldeter Betriebsparameter erkannt.

In Kombination mit der gemeldeten Temperatur der Brennkraftmaschine kann beim Warmstart eine erhöhte Heizleistung – die beim Kaltstart erforderlich wäre – verzichtet werden.

Die erfindungsgemäße Zündvorrichtung zeichnet sich durch ihre Mehrstofffähigkeit aus. Es können sowohl höhere Alkohole $C_3$- $C_6$-Alkohole als auch Benzin oder Diesel einzeln oder im Gemisch sicher gezündet werden. Dabei ist jedoch zu beachten, daß abhängig vom Einbau, Einspritzverfahren und Kraftstoff die Anzahl und Größe der in der Hülse 100 vorzusehenden Öffnungen anzupassen ist. Es muß sichergestellt sein, daß für alle Lastzustände eine ausreichende Gemischmenge an die heißen Oberflächen des Glühkörpers und des Glühstiftes gelangen kann.

## Patentansprüche

1. Zündvorrichtung für eine luftverdichtende Brennkraftmaschine mit einer im Zylinderkopf angeordneten Einspritzdüse (1), wobei die Zündvorrichtung (2) aus zumindest einem Heizelement (6) und einer das Heizelement zumindest über eine Teilhöhe abdeckenden Hülse (10) besteht, in der mindestens eine Eintrittsöffnung (13) für den Kraftstoff angeordnet ist, dadurch gekennzeichnet, daß zwischen der Hülse (10) und dem Heizelement (6) ein als Glühkörper (11) ausgebildeter Wärmespeicher angeordnet ist, wobei der Glühkörper (11) das Heizelement (6) über einen Teil seiner Länge koaxial umfaßt, und daß das Heizelement (6) mit einem Steuergerät (18) verbunden ist, das in Abhängigkeit von Betriebsparametern der Brennkraftmaschine die Heizleistung des Heizelementes (6) schaltet.

2. Zündvorrichtung nach Anspruch 1, dadurch gekennzeichnet, daß der Glühkörper als Glühwendel (11a, 11b) ausgebildet ist.

3. Zündvorrichtung nach Anspruch 2, dadurch gekennzeichnet, daß der Glühwendel (11) aus vorzugsweise fünf bis zehn Windungen eines Drahtes mit einem Durchmesser von 1,5 bis 1,0 mm gebildet ist.

4. Zündvorrichtung nach Anspruch 1, dadurch gekennzeichnet, daß der Glühkörper als perforierter, hohlzylindrischer Einsatz ausgebildet ist.

5. Zündvorrichtung nach einem der Ansprüche 1 bis 4, dadurch gekennzeichnet, daß der Glühkörper aus verzunderungsbeständigem Chrom-Nickel-Stahl hergestellt ist.

6. Zündvorrichtung nach einem der Ansprüche 1 bis 5, dadurch gekennzeichnet, daß der Glühkörper eine katalytische Beschichtung aufweist.

7. Zündvorrichtung nach einem der Ansprüche 1 bis 6, dadurch gekennzeichnet, daß in einer Zündvorrichtung (2) mindestens zwei ineinander geschobene Glühkörper angeordnet sind.

8. Zündvorrichtung nach einem der Ansprüche 1 bis 7, dadurch gekennzeichnet, daß der Glühkörper (11) selbst das Heizelement (6) bildet.

9. Vorrichtung nach einem der Ansprüche 1 bis 8, dadurch gekennzeichnet, daß zwischen der Eintrittsöffnung und dem Glühkörper (11) eine vorzugsweise als Hülsenring (9) ausgebildete Prallwand angeordnet ist.

10. Zündvorrichtung nach einem der Ansprüche 1 bis 9, dadurch gekennzeichnet, daß der Einspritzstrahl der Einspritzdüse (1) neben der Eintrittsöffnung (13) auf den Hülsenmantel auftrifft.

11. Zündvorrichtung nach Anspruch 9, dadurch gekennzeichnet, daß die Eintrittsöffnung (13) etwa gleichnasig zu einem auf die Zündvorrichtung (2) ausgerichteten Zündstrahl der Einspritzdüse (1) angeordnet ist.

## Revendications

1. Dispositif d'allumage pour un moteur à combustion interne à compression d'air comportant un injecteur (1) monté dans la tête de cylindre, le dispositif d'allumage (2) étant constitué par au moins un élément chauffant (6) et une douille (10) recouvrant cet élément chauffant sur au moins une partie de sa hauteur et dans lequel est ménagé au moins un orifice d'entrée (13) pour le carburant, dispositif d'allumage caractérisé en ce que, entre la douille (10) et l'élément chauffant (6) est disposé un accumulateur de chaleur constitué sous la forme de corps incandescent (11), ce corps incandescent (11) entourant coaxialement l'élément chauffant (6) sur une partie de sa longueur, et en ce que l'élément chauffant (6) est relié à un appareil de commande (18) qui fait fonctionner la puissance calorifique de cet élément chauffant (6) en fontcion de paramètres de fonctionnement de moteur à combustion interne.

2. Dispositif d'allumage selon la revendication 1, caractérisé en ce que le corps incandescent est constitué sous la forme de filament incandescent (11a, 11b).

3. Dispositif d'allumage selon la revendication 2, caractérisé en ce que le filament incandescent (11) est formé de préférence de cinq à dix spires d'un fil métallique d'un diamètre de 0,5 à 1,0 mm.

4. Dispositif d'allumage selon la revendication 1, caractérisé en ce que le corps incandescent est constitué comme pièce d'insertion sous forme de cylindre creux perforé.

5. Dispositif d'allumage selon l'une des revendications 1 à 4, caractérisé en ce que le corps incandescent est fabriqué en acier au chrom-nickel résistant à la calamine.

6. Dispositif d'allumage selon l'une des revendications 1 à 5, caractérisé en ce que le corps incandescent est pourvu d'un revêtement catalytique.

7. Dispositif d'allumage selon l'une des revendications 1 à 6, caractérisé en ce que dans un dispositif d'allumage (2) sont disposés au moins deux corps incandescents (11) introduits l'un dans l'autre.

8. Dispositif d'allumage selon l'une des revendications 1 à 7, caractérisé en ce que le corps incandescent (11) constitue lui-même l'élément chauffant (6).

9. Dispositif d'allumage selon l'une des revendications 1 à 8, caractérisé en ce que, entre l'orifice d'entrée et le corps incandescent (11) est disposée une paroi d'impact constituée de préférence comme aneau (9) formant douille.

10. Dispositif d'allumage selon l'une des revendications 1 à 9, caractérisé en ce que le jet d'injection de l'injecteur (1) vient passer à côté de l'orifice d'entrée (13) sur la surface extérieure de la douille.

11. Dispositif d'allumage selon la revendication 9, caractérisé en ce que l'orifice d'entrée (13) est disposé à peu près sur le même axe qu'un jet, servant à l'allumage, de l'injecteur (1), et dirigé sur le dispositif d'allumage (2).

## Claims

1. An igniter for an air-compression internal-combustion engine comprising an injection nozzle (1) disposed in the cylinder head, the igniter (2) comprising at least one heating element (6) and a sleeve (10) covering the heating element up at least part of its height and formed with at least one entry opening (13) for the fuel, characterised in that a heat store constructed as a glow member (11) is disposed between the sleeve (10) and the heating element (6), the glow member (11) coaxially surronds the heating element (6) along part of its length, and the heating element (6) is connected to a control device (18) which varies the heating capacity of the heating element (6) in dependence on operating parameters of the internalcombustion engine.

2. An igniter according to claim 1, characterised in that the glow member is constructed as a spiral-wound filament (11a, 11b).

3. An igniter according to claim 2, characterised in that the spiral-wound filament (11) is made up of preferably 5 to 10 turns of a wire having a diameter of 0,5 to 1,0 mm.

4. An igniter according to claim 1, characterised in that the spiral-wound filament is a perforated hollow cylindrical insert.

5. An igniter according to any of claims 1 to 4, characterised in that the glow member is made of scaling-resistant chromium nickel steel.

6. An igniter according to any of claims 1 to 5, characterised in that the glow member has a catalytic coating.

7. An igniter according to any of claims 1 to 6, characterised in that at least two glow members (11) inserted into one another are disposed in an igniter (2).

8. An igniter according to any of claims 1 to 7, characterised in that the glow member (11) itself constitutes the heating element (6).

9. An igniter according to any of claims 1 to 8, characterised in that a baffle, preferably in the form of a sleeve ring (9), is disposed between the inlet opening and the glow member (11).

10. An igniter according to any of claims 1 to 9, characterised in that the jet from the injection nozzle (1) strikes the surface of the sleeve near the entry opening (13).

11. A device according to claim 9, characterised in that the entry opening (13) is disposed substantially coaxially with an ignition jet from the injection nozzle (1) aimed at the igniter (2).

Fig. 1

Fig. 2

Fig.3

EP 0 260 575 B1

Fig.4

Fig.5

EP 0 260 575 B1

Fig. 6

Fig. 7